Europäisches Patentamt

European Patent Office

Office européen des brevets

(19)

(11) Publication number : **0 001 902**
**B1**

(12) # EUROPEAN PATENT SPECIFICATION

(45) Date of publication of patent specification :
25.03.81

(51) Int. Cl.³ : **B 62 D 25/18, F 16 B 43/00**

(21) Application number : 78300548.1

(22) Date of filing : 26.10.78

(54) **Vehicle mud flap assembly.**

(30) Priority : 27.10.77 GB 4480677

(43) Date of publication of application :
16.05.79 (Bulletin 79/10)

(45) Publication of the grant of the patent :
25.03.81 Bulletin 81/12

(84) Designated contracting states :
**BE CH DE FR LU NL SE**

(56) References cited :
**DE - A - 1 455 497**
**DE - C - 714 242**
**FR - A - 329 243**
**FR - A - 1 501 931**
**FR - A - 2 071 036**
**US - A - 1 904 343**
**US - A - 3 417 802**
**US - A - 3 711 119**
**US - A - 3 953 053**

(73) Proprietor : **CANNON RUBBER LIMITED**
**Cannon Works Ashley Road**
**Tottenham London N17 9LH (GB)**

(72) Inventor : **Williams, Roger Leonard**
**6 Beverley Close**
**Broxbourne Hertfordshire (GB)**

(74) Representative : **Jenkins, Richard Gray et al**
**R.G.C. Jenkins & Co. Chancery House 53-64 Chancery Lane**
**London, WC2A 1QU (GB)**

Imprimerie Jouve, 17, rue du Louvre, 75001 Paris, France

Vehicle mud flap assembly

The present invention relates to a vehicle mud flap assembly which enables a vehicle mud flap to be attached quickly and easily to the frame of a vehicle and to be easily adjusted and oriented correctly in relation to the body of the vehicle.

Hitherto, vehicle mud flaps have been attached to the body of a vehicle with the aid of clamps which are attached to an edge of the flap and are employed to clamp the flap to the edge of the vehicle body. This method of attaching a flap to a vehicle provides little if any tolerance on the position and orientation of the flap relative to the vehicle body and also has the disadvantage that the clamps are normally tightened from the side of the flap which is relatively inaccessible, making the attachment of the flap to the vehicle body time consuming and laborious.

It is therefore an object of the present invention to provide a vehicle mud flap assembly which enables the flap to be quickly and easily mounted on a vehicle body, which provides a blind fastening for the flap which can be tightened from the outside of the flap thereby giving easy access and which allows for substantial tolerance and adjustment of the position and orientation of the flap relative to the vehicle.

In order to achieve these and other objects of the invention we provide a vehicle mud flap assembly comprising a resilient flap having front and rear faces and a plurality of apertures and at least two fastening devices each of which comprises a clamping element located adjacent the rear face of the flap, a bolt having a head and a shank which extends through one of the apertures in the flap and through the clamping element and a nut threadedly engaged on the shank of the bolt, one or other of the bolt head or the nut being located against and keyed to the clamping element, characterised in that the clamping element comprises a disc having an annular wedge surface facing the rear surface of the flap which forms an annular tapering lead in for entry of a vehicle panel edge between the flap and the clamping element.

Preferred forms of the present invention will now be described with reference to the accompanying drawings in which :

Figure 1 is a front view of a vehicle mud flap according to the present invention ;

Figure 2 is an exploded view in perspective of the flap shown in Figure 1 and a fastening device for attaching the flap to a vehicle ;

Figure 3 is a perspective view illustrating the manner in which the flap is attached to a vehicle ;

Figure 4 is a plan view partly in section showing the flap of Figure 1 mounted on a vehicle ;

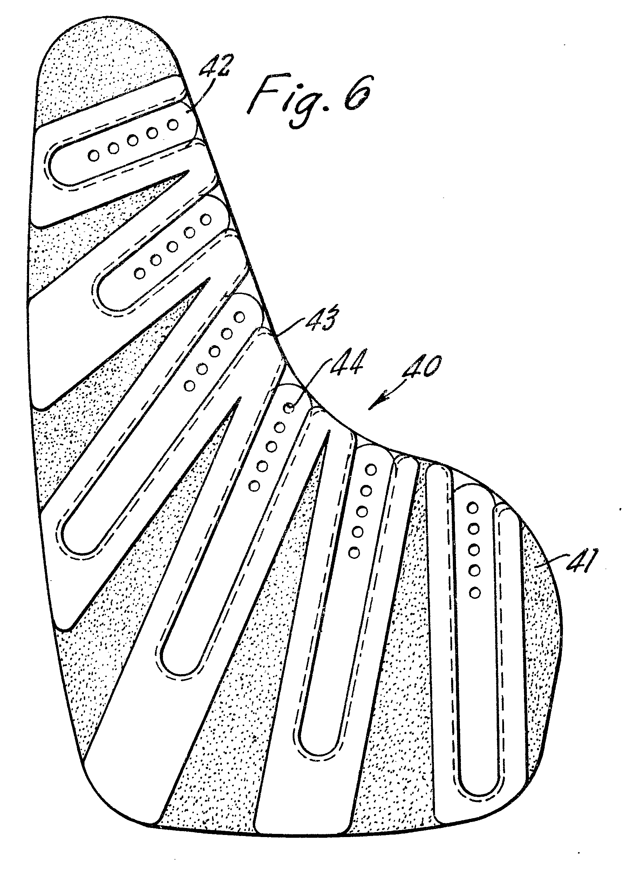

Figure 5 shows a detail of Figure 4 on an enlarged scale ;

Figure 6 is an elevation of a vehicle mud flap forming a modification of the present invention ; and

Figure 7 is a plan view similar to Figure 4 showing the flap of Figure 6 mounted on a vehicle.

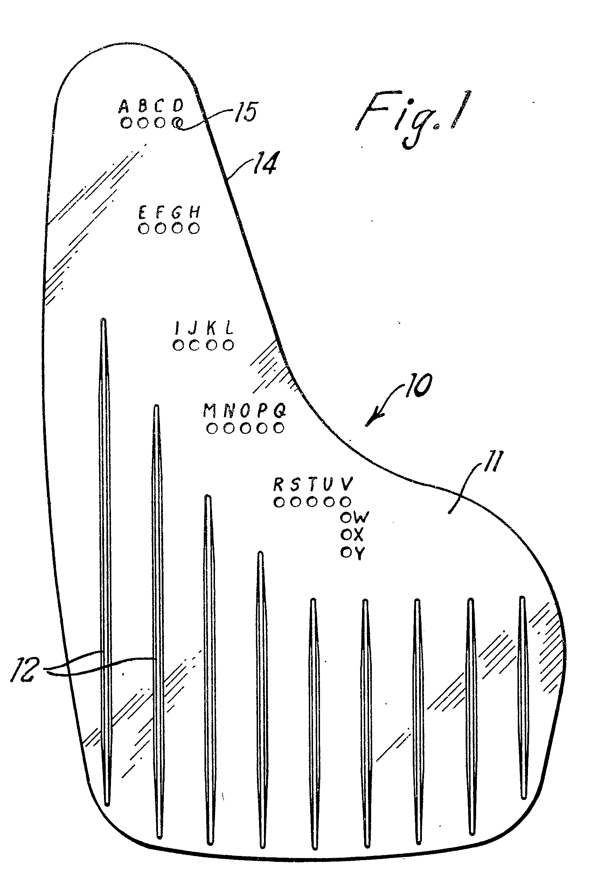

In Figures 1 to 4 a vehicle mud flap is indicated generally at 10. The flap 10 is formed preferably by compression, transfer or injection moulding from any suitable material such as a rubber, synthetic rubber or a synthetic plastics material. The flap comprises a substantially flat and flexible body portion 11 which is stiffened over a part of its surface area by a plurality of stiffening ribs 12. The stiffening ribs 12 are arranged in parallel although this is not essential, and they project from one face only of the body of the flap. The other face of the body of the flap is generally flat except for a raised rim 13 which extends around the periphery of the flap.

An edge 14 of the flap 10 is curved so as to conform generally to the shape of the edge of a vehicle body in the region to which the mud flap is attached, that is immediately behind the wheel. In the area of the flap adjacent to the curved edge 14 a plurality of rows of through apertures 15 are provided to receive fastening assemblies 16. Each of the apertures 15 is identified on the face of the flap which carries the ribs 12 by a letter of the alphabet. Initially the apertures 15 do not extend through the flap but are closed adjacent one surface of the flap by a thin membrane 17 which can be easily broken by inserting a bolt through the aperture.

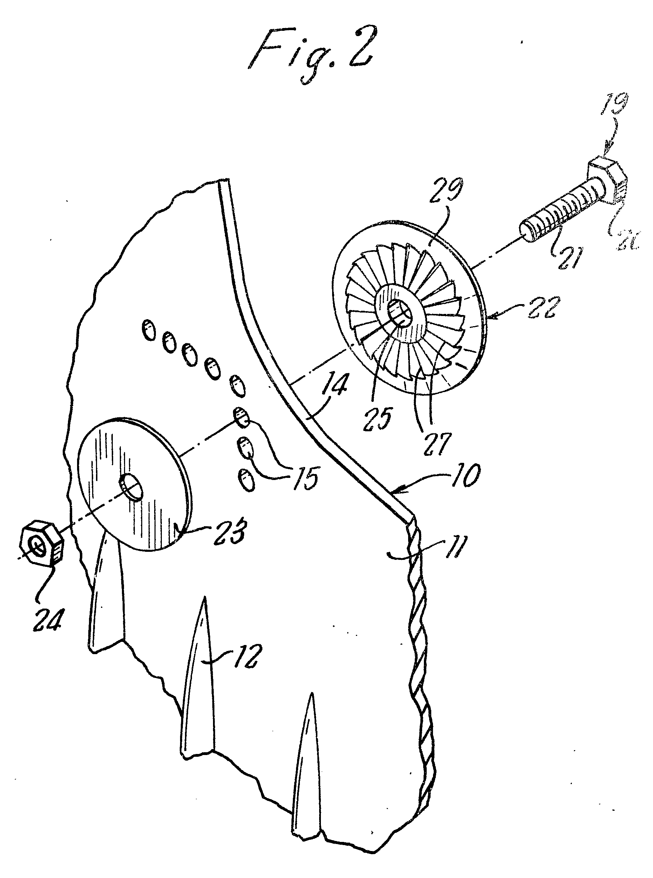

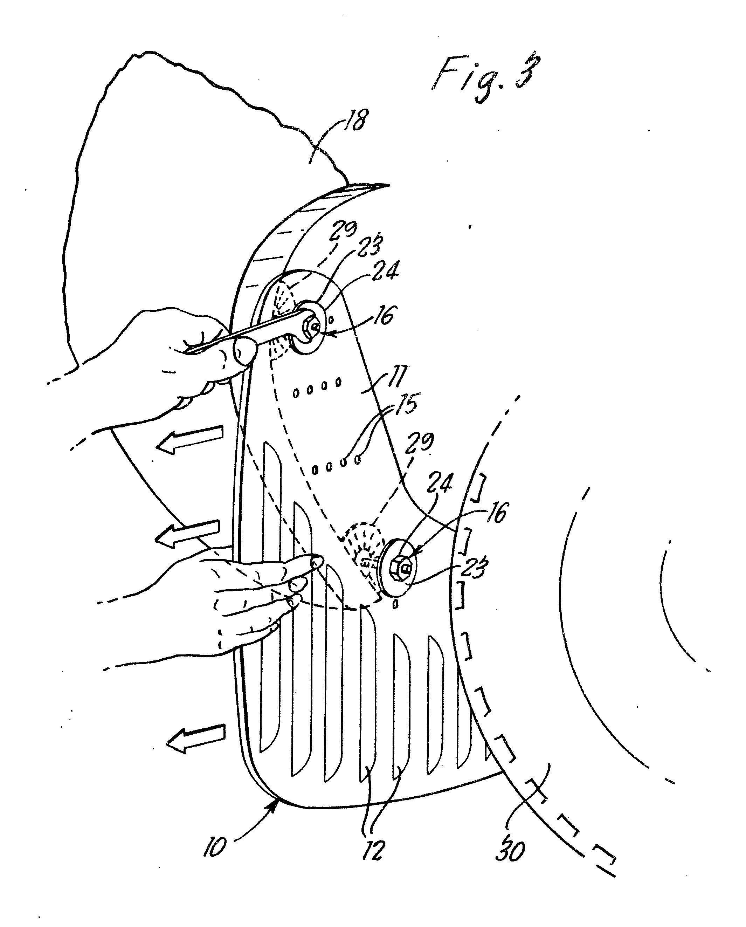

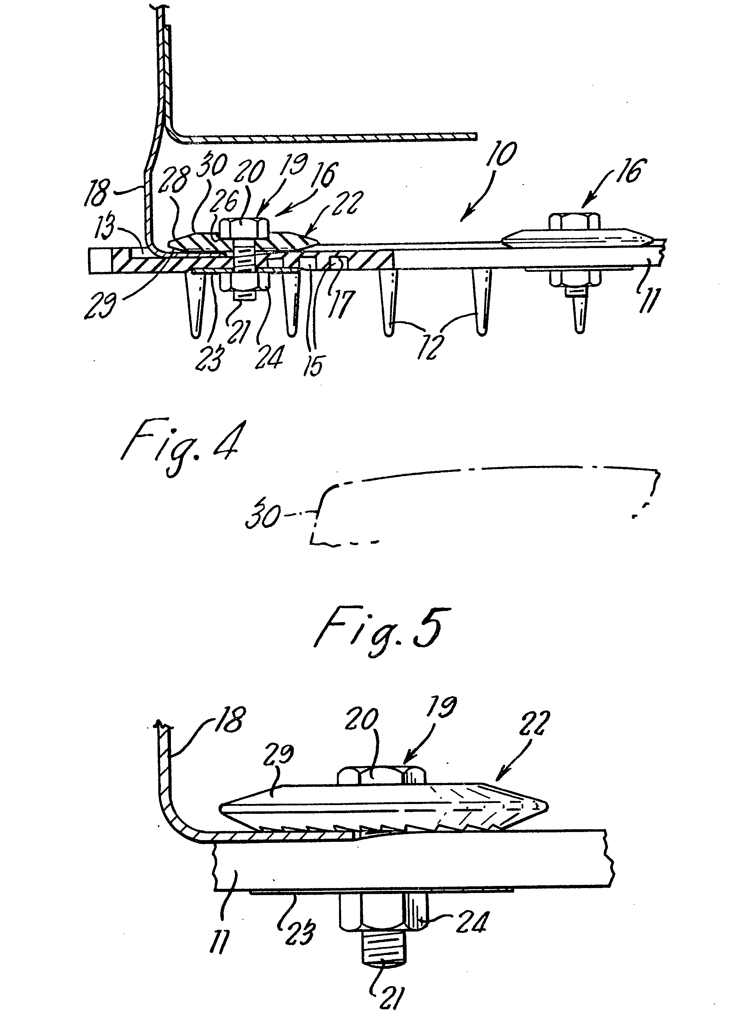

The flap 10 is attached to a flanged edge portion 18 of a vehicle body which is shown in Figures 3 and 4 with the aid of two of the fastening devices 16, one of which is shown in detail in Figure 2. Each fastening device comprises a threaded metal or synthetic plastic bolt 19 having a head 20 and a threaded shank 21. The root diameter of the thread on the shank 21 is preferably equal to the diameter of each of the apertures 15 so that the shank 21 is a friction fit through the aperture. The bolt 19 carries a clamping element in the form of a plastics retaining disc 22, and a metal or synthetic plastics washer 23 and clamping means in the form of a metal or synthetic plastics nut 24. The retaining disc 22 is formed with a through bore 25, a hexagonal countersink 26 in one major surface to receive the head 20 of the bolt 19 and a plurality of radially extending ridges 27 in its other major surface. The periphery of the retaining disc 22 has a bi-conical taper to form similar annular inclined wedge faces 28 and 29 respectively. The washer 23 is located between the retaining disc 22 and the nut 24 adjacent the ridges 27. The ridges 27 are in the form of ratchet teeth which will resist rotation of the disc in one sense.

In order to attach the flap 10 to the flanged edge 18 of the vehicle body, the two fastening devices 16 are attached to the flap 10 through the appropriate apertures 15. The appropriate apertures can be selected by trial and error to achieve the correct position and orientation of the flap relative to the vehicle body. Each fastening device 16 is then attached to the flap by removing the nut 24 and washer 23, presenting the shank of the bolt to the flat side of the flap and screwing the bolt through an aperture 15 so as to break the membrane 17 and form a thread on the cylindrical internal wall of the aperture. When the shank has been screwed home so that the disc 22 is held firmly against the flap, the washer 23 is placed over the projecting end of the shank and the nut 24 is screwed loosely into place. Since the diameter of the aperture 15 is less than the crest diameter of the thread on the shank 21, the material of the flap will grip the shank and prevent it from rotating as the nut 24 is tightened. The head 20 of the bolt is located in the recess 26 on the disc so that the disc is held against rotation relative to the bolt.

With the two fastening devices 16 mounted on the flap 10, the flap is applied to the flanged edge 18 as shown in Figure 3 by locating the edge 18 between the flat face of the flap and the ridged surfaces of the retaining discs 22 of the fastening devices. The wedge face 29 of each retaining disc forms a gap adjacent the flap which provides an easy lead in for the edge 18 of the vehicle body. The flap is pushed on to the edge 18 until the edge is firmly gripped between the discs and the flap. The position and angle of the flap can then be adjusted until it is correctly aligned with the vehicle body. The nut 24 of each fastening device is then tightened so as to clamp the edge 18 of the vehicle body securely between the retaining discs 22 and the body 11 of the flap. As each nut is tightened, the ridges 27 bear against the surface of the flange 18 and resist rotation of the disc and bolt, enabling the nut to be tightened securely without the necessity to grip and hold the head of the bolt.

It will be seen that the nuts 24 of the fastening devices are located on the outer surface of the flap, that is the surface adjacent to and facing the wheel 30 of the car so that they can be seen and easily reached for tightening of the flap on to the vehicle body.

If it is found that one or both of the fastening devices have been mounted on the flap through the wrong aperture 15, the flap can be quickly and easily demounted from the vehicle body by loosening the nuts 24. One or both devices can then be re-positioned and the flap remounted on the vehicle body.

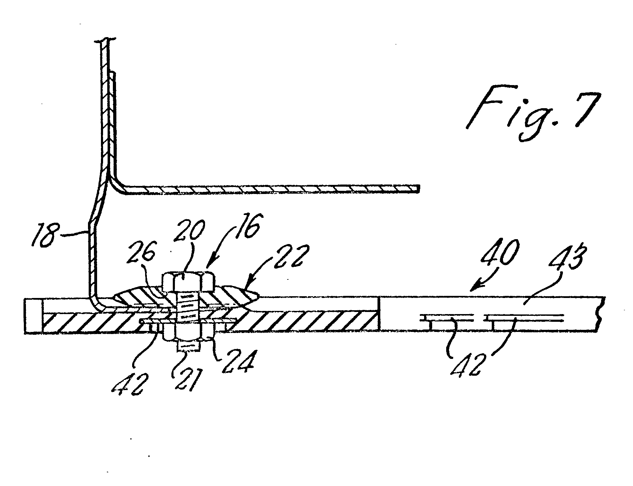

In certain circumstances it has been found that the projecting ribs 12 on the flap 10 are not desirable and it is therefore necessary to find alternative means for stiffening the flexible flap 10. We have found that this can be done effectively by providing stiffening strips embedded within the material of the flap as shown in the flap 40 which is illustrated in Figures 6 and 7.

The flap 40 is similar in external shape to the flap 10 and comprises a body portion 41 formed by compression, transfer or injection moulding from a suitable rubber, synthetic rubber or synthetic plastics material. A plurality of stiffening strips 42 which are preferably made from metal, but may alternatively be made from a relatively rigid plastics, are inserted into channels formed in the body 41 so as to be exposed on one face of the flap. The strips 42 are arranged to extend up to the curved edge 43 of the flap and each strip is formed with a plurality of apertures 44 to receive a fastening assembly 16.

Figure 7 shows the flap 40 attached to the flanged edge 18 of the vehicle body, the only difference between the assembly shown in Figure 7 and the assembly shown in Figure 4 being that the washer 23 is eliminated and the nut 24 bears directly against one of the metal strips 42. In all other respects the flap 40 is similar to the flap 10, functions in the same manner and is attached to the flanged edge 18 of the vehicle body in the same manner as the flap 10.

It will be appreciated that the position of the bolt and nut may be reversed so that either the nut or the bolt head is located in the countersink recess 26 in the disc, provided that the disc itself is located adjacent the rear face of the flap.

## Claims

1. A vehicle mud flap assembly comprising a resilient flap having front and rear faces and a plurality of apertures and at least two fastening devices each of which comprises a clamping element located adjacent the rear face of the flap, a bolt having a head and a shank which extends through one of the apertures in the flap and through the clamping element and a nut threadedly engaged on the shank of the bolt, one or other of the bolt head or the nut being located against and keyed to the clamping element, characterised in that the clamping element comprises a disc having an annular wedge surface facing the rear surface of the flap which forms an annular tapering lead in for entry of a vehicle panel edge between the flap and the clamping element.

2. A vehicle mud flap assembly as claimed in claim 1, characterised in that the clamping element comprises a circular disc having a peripheral portion which tapers radially outwardly towards the periphery of the disc.

3. A vehicle mud flap assembly as claimed in claim 1 or claim 2, characterised in that the clamping element is formed with a plurality of radially extending teeth on the surface adjacent the flap which resist relative rotation between the clamping element and the flap when a tightening torque is applied to the nut.

4. A vehicle mud flap assembly as claimed in any preceding claim, characterised in that the diameter of each aperture in the flap is less than the crest diameter of the thread of each bolt whereby each bolt is keyed to the flap.

5. A vehicle mud flap assembly as claimed in any preceding claim, characterised in that the flap is stiffened by a plurality of strips of relatively rigid material which are embedded in the flap and the apertures are formed through the stiffening strips.

## Ansprüche

1. Schmutzfänger-Einheit für Kraftfahrzeuge, mit einem elastischen Schmutzfänger-Schild, das eine Vorderseite und eine Rückseite sowie eine Vielzahl von Öffnungen besitzt, und mindestens zwei Befestigungseinrichtungen, von denen jede ein Klemmelement, das an die Rückseite des Schmutzfänger-Schildes angrenzend angeordnet ist, einen Schraubbolzen mit einem Kopf und einem Schaft, der sich durch eine der Öffnungen im Schmutzfänger-Schild und das Klemmelement erstreckt, und eine Mutter aufweist, die über ein Gewinde mit dem Schaft des Bolzens in Eingriff steht, wobei entweder der Kopf des Bolzens oder die Mutter am Klemmelement festgelegt und auf diesem festgekeilt ist, dadurch gekennzeichnet, daß das Klemmelement (22) eine Scheibe (22) aufweist, die eine umlaufende keilförmige Oberfläche (29) besitzt, die der Rückseite des Schmutzfänger-Schildes (10) gegenüberliegt und die eine ringförmige und keilförmige Führung für das Eindringen eines Randabschnitts (18) einer Kraftfahrzeug-Karosseriefläche zwischen das Schmutzfänger-Schild (10) und das Klemmelement (22) ausbildet.

2. Schmutzfänger-Einheit nach Anspruch 1, dadurch gekennzeichnet, daß das Klemmelement (22) aus einer Kreisscheibe (22) besteht, die einen Außenabschnitt (28, 29) besitzt, der sich nach außen zum Umfangsabschnitt der Scheibe (22) hin keilförmig verjüngt.

3. Schmutzfänger-Einheit nach Anspruch 1 oder 2, dadurch gekennzeichnet, daß das Klemmelement (22) auf der an das Schmutzfänger-Schild (10) angrenzenden Oberfläche eine Vielzahl von sich radial erstreckenden Zähnen (27) aufweist, die einer Relativdrehung zwischen dem Klemmelement (22) und dem Schmutzfänger-Schild (10) entgegenwirken, wenn auf die Mutter (24) ein Anzugsdrehmoment einwirkt.

4. Schmutzfänger-Einheit nach einem der vorangehenden Ansprüche, dadurch gekennzeichnet, daß der Durchmesser einer jeden Öffnung (15) des Schmutzfänger-Schildes (10) kleiner ist als der Außendurchmesser des Gewindes (21) des entsprechenden Bolzens (19), wodurch jeder Bolzen (19) mit dem Schmutzfänger-Schild (10) verkeilt bzw. verzahnt wird.

5. Schmutzfänger-Einheit nach einem der vorhergehenden Ansprüche, dadurch gekennzeichnet, daß das Schmutzfänger-Schild (40) durch eine Vielzahl von aus relativ festem Werkstoff bestehenden Streifen bzw. Bändern (42) versteift ist, die in das Schmutzfänger-Schild (40) eingebettet sind, und daß die Öffnungen (44) durch die versteifenden Bänder (42) verlaufen.

## Revendications

1. Un ensemble de bavette de garde-boue pour véhicule, comprenant une bavette élastique ayant une face avant, une face arrière et des trous, ainsi qu'au moins deux dispositifs de fixation comprenant chacun un élément de serrage contigu à la face arrière de la bavette, une vis possédant une tête et une tige qui traverse l'un des trous de la bavette et l'élément de serrage, de même qu'un écrou vissé sur la tige de la vis, la tête de vis ou l'écrou étant appliqué contre l'élément de serrage et étant empêché de tourner par rapport à lui, qui est caractérisé en ce que l'élément de serrage est un disque présentant une surface annulaire inclinée dirigée vers la face arrière de la bavette et qui forme un guide d'entrée annulaire évasé pour la pénétration du bord d'un panneau du véhicule entre la bavette et l'élément de serrage.

2. Un ensemble de bavette de garde-boue pour véhicule selon la revendication 1, caractérisé en ce que l'élément de serrage est un disque circulaire possédant une partie périphérique qui se rétrécit coniquement dans le sens radialement vers l'extérieur vers la périphérie du disque.

3. Un ensemble de bavette de garde-boue pour véhicule selon la revendication 1 ou 2, caractérisé en ce que l'élément de serrage présente, du côté contigu à la bavette, des dents s'étendant radialement et s'opposant à la rotation relative de l'élément de serrage et de la bavette lorsqu'un couple de serrage est appliqué à l'écrou.

4. Un ensemble de bavette de garde-boue pour véhicule selon l'une quelconque des revendications précédentes, caractérisé en ce que le diamètre de chaque trou de la bavette est plus petit que le diamètre extérieur du filet de chaque vis, de sorte que chaque vis est empêchée de tourner par rapport à la bavette.

5. Un ensemble de bavette de garde-boue pour véhicule selon l'une quelconque des revendications précédentes, caractérisé en ce que la bavette est raidie par des bandes d'une matière relativement rigide qui sont incorporées dans la bavette, lesdits trous étant formés dans les bandes de raidissement.

Fig. 1

A B C D 15
O O O O

E F G H
O O O O

14

I J K L
O C O O

M N O P Q
O O O O O

10

R S T U V
O O O O O
O W
O X
O Y

11

12

Fig.2

0 001 902

3/6

Fig. 3

18

29
23
24
16

11
15
29
24
16
23

10
12
30

Fig. 4

Fig. 5

Fig. 6

Fig. 7

18

26   20   16
          22

42   21   24

40   43

42